# EUROPÄISCHE PATENTSCHRIFT

(11) **EP 4 116 160 B1**
(45) Veröffentlichungstag und Bekanntmachung des Hinweises auf die Patenterteilung: **06.03.2024**
(21) Anmeldenummer: 22180981.7
(22) Anmeldetag: 24.06.2022
(51) Int. Cl.: B60T 8/32, B60T 13/66, B60T 17/22, B60T 15/02, B60T 15/18, B60T 15/30, B60T 15/20

(54) **ANGLEICHVENTIL ZUM ANGLEICH EINES STEUERKAMMERDRUCKS EINER DRUCKMEDIENBREMSE FÜR SCHIENENFAHRZEUGE UND BREMSSYSTEM**
ADJUSTING VALVE FOR ADJUSTING A CONTROL CHAMBER PRESSURE OF A PRESSURE MEDIUM BRAKE FOR RAILWAY VEHICLES AND BRAKE SYSTEM
SOUPAPE D'AJUSTEMENT DESTINÉE À L'AJUSTEMENT DE LA PRESSION DE CHAMBRE DE COMMANDE D'UN FREIN À FLUIDE DE PRESSION POUR VÉHICULES FERROVIAIRES ET SYSTÈME DE FREINAGE

(30) Priorität: 09.07.2021 DE 102021117737
(43) Veröffentlichungstag der Anmeldung: 11.01.2023
(73) Patentinhaber: KNORR-BREMSE Systeme für Schienenfahrzeuge GmbH, 80809 München (DE)
(72) Erfinder: PETTER, Thomas, 80336 München (DE); SEIDEL, Mark, 12683 Berlin (DE); SONNTAG, Stefan, 82024 Taufkirchen (DE)

(56) Entgegenhaltungen:
- GB-A- 164 041
- GB-A- 408 266
- US-A- 2 055 967

## Beschreibung

Die Erfindung betrifft ein Angleichventil zum Angleich eines Steuerkammerdrucks einer Druckmedienbremse für Schienenfahrzeuge sowie ein Bremssystem für eine Druckmedienbremse für Schienenfahrzeuge.

Angleichventile, die beispielsweise für indirekte Druckluftbremsen für Schienenfahrzeuge eingesetzt werden, können innerhalb eines Steuerventils oder separat angeordnet werden, um eine Überladung in der Steuerkammer des Steuerventils abzubauen. Der Abbau von Überladungen des Steuerkammerdrucks eines solchen Steuerventils erfolgt zum Beispiel beim Lösen der Bremse nach einer vorangegangenen Schnellbremsung.

Aus dem Stand der Technik sind Angleichventile auf der Basis von Sitzventilkonstruktionen bekannt. Diese Lösungen sind aufgrund der Sitzventilkonstruktion vielteilig und benötigen einen vergleichsweise großen Bauraum, um jeweilige Paarungen von Ventilsitzen mit Ventiltellerabschnitten eines Sitzventilkolbens realisieren zu können. Zudem erfordert die Abdichtung über Dichtflächen der Paarungen aus Ventilsitz und Ventilteller, die in Bezug auf die Bewegungsrichtung des Sitzventilkolbens entlang seiner Längsachse als axiale Dichtflächen ausgebildet sind, eine präzise Wegabstimmung, um ein sicheres Anliegen des Ventiltellers auf dem Ventilsitz gewährleisten zu Das Dokument US 2 055 967 A beschreibt ein konventionelles Angleichventil mit Sitzventil.

In Anbetracht der vorstehenden Ausführungen liegt der vorliegenden Erfindung die Aufgabe zugrunde, ein Angleichventil zum Angleich eines Steuerkammerdrucks einer Druckmedienbremse für Schienenfahrzeuge sowie ein Bremssystem für eine Druckmedienbremse für Schienenfahrzeuge bereitzustellen, über die ein Angleich eines Steuerkammerdrucks mit einer vereinfachten Konstruktion zuverlässig realisiert werden kann.

Die Aufgabe wird durch ein Angleichventil nach Anspruch 1 sowie ein Bremssystem nach Anspruch 14 gelöst. Vorteilhafte Weiterbildungen der Erfindung sind in den abhängigen Ansprüchen enthalten.

Erfindungsgemäß weist ein Angleichventil zum Angleich eines Steuerkammerdrucks einer Druckmedienbremse für Schienenfahrzeuge eine Schieberkolbenaufnahme mit einer Schieberkolbenführung, einen Schieberkolben, der in der Schieberkolbenführung geführt wird und in einer durch die Schieberkolbenführung vorgegebenen Bewegungsrichtung bidirektional bewegbar ist, einen ersten Verbindungsabschnitt, der eine Hauptdruckmedienleitung mit der Schieberkolbenaufnahme über zumindest eine erste schieberkolbenaufnahmeseitige Verbindungsöffnung fluidisch verbindet, einen zweiten Verbindungsabschnitt, der eine Steuerkammer mit der Schieberkolbenaufnahme über zumindest eine zweite schieberkolbenaufnahmeseitige Verbindungsöffnung fluidisch verbindet, wobei die zumindest eine zweite schieberkolbenaufnahmeseitige Verbindungsöffnung in Bewegungsrichtung des Schieberkolbens von der zumindest einen ersten schieberkolbenaufnahmeseitige Verbindungsöffnung beabstandet ist, und eine Angleichvolumenaufnahmekammer auf, die über einen dritten Verbindungsabschnitt mit der Schieberkolbenaufnahme über zumindest eine dritte schieberkolbenaufnahmeseitige Verbindungsöffnung fluidisch verbunden ist, auf. Der Schieberkolben ist dabei derart konfiguriert, dass in zumindest einer ersten Position des Schieberkolbens in der Bewegungsrichtung die Angleichvolumenaufnahmekammer über den dritten Verbindungsabschnitt und den zweiten Verbindungsabschnitt fluidisch mit der Steuerkammer verbindbar ist.

Durch die Verwendung eines Schieberkolbens kann auf aufwändige Sitzventilkonstruktionen verzichtet werden. Die fluidische Verbindung der Angleichvolumenaufnahmekammer mit der Steuerkammer erfolgt somit lediglich über die Freigabe der dritten schieberkolbenaufnahmeseitige Verbindungsöffnung und der zweiten schieberkolbenaufnahmeseitige Verbindungsöffnung in der zumindest einen ersten Position des Schieberkolbens. Die Freigabe kann dabei die fluidische Verbindung der Angleichvolumenaufnahmekammer mit der Steuerkammer über die Schieberkolbenaufnahme und/oder den Schieberkolben ermöglichen.

Durch die Führung des Schieberkolbens in der Schieberkolbenaufnahme über die Schieberkolbenaufnahmeführung bildet der Schieberkolben zusammen mit der Schieberkolbenaufnahmeführung und/oder der Schieberkolbenaufnahme zumindest abschnittsweise Dichtflächen aus. In Bezug auf eine Längsachse des Schieberkolbens, die sich in die bidirektionale Bewegungsrichtung des Schieberkolbens erstreckt, weist der Schieberkolben somit radiale Dichtflächen auf. In der zumindest einen ersten Position des Schieberkolbens zur fluidischen Verbindung der Angleichvolumenaufnahmekammer mit der Steuerkammer ist eine damit in Abhängigkeit der Position des Schieberkolbens einhergehende Abdichtung der dritten schieberkolbenaufnahmeseitige Verbindungsöffnung und der zweiten schieberkolbenaufnahmeseitige Verbindungsöffnung durch den Schieberkolben in Zusammenwirken mit der Schieberkolbenaufnahmeführung und/oder der Schieberkolbenaufnahme aufgehoben. Durch eine weitere Bewegung des Schieberkolbens aus der zumindest einen ersten Position kann die fluidische Verbindung der Angleichvolumenaufnahmekammer mit der Steuerkammer wieder getrennt werden. Hierzu wird zumindest eine der dritten schieberkolbenaufnahmeseitigen Verbindungsöffnung und der zweiten schieberkolbenaufnahmeseitigen Verbindungsöffnung durch den Schieberkolben gegenüber der jeweils anderen Verbindungsöffnung abgedichtet. Beispielsweise kann sich hierzu eine der radialen Dichtungsflächen des Schieberkolbens in Zusammenwirken mit der Gegendichtfläche der Schieberkolbenaufnahmeführung und/oder Schieberkolbenaufnahme über die jeweilige Verbindungsöffnung erstrecken. Der Schieberkolben unterscheidet sich somit von Sitzventilkonstruktionen dadurch, dass die Dichtflächen in Bezug auf die Längsachse des Schieberkolbens radial ausgebildet sind. Der konstruktive Aufbau wird dadurch vereinfacht, dass lediglich über die bidirektionale Bewegung des Schieberkolbens in Abhängigkeit der jeweiligen Position des Schieberkolbens schieberkolbenaufnahmeseitige Verbindungsöffnungen, die ebenfalls radial angeordnet sind, freigebbar sind oder abgedichtet werden. Somit kann auf Ventilsitze oder anderweitige mit Sitzventilkonstruktionen einhergehende Komponenten verzichtet werden. Die radialen Dichtflächen des Schieberkolbens können zudem eine gegenüber den axialen Dichtflächen einer Sitzventilkonstruktion höhere Positionierungstoleranz aufweisen.

Gemäß einer Weiterbildung weist das Angleichventil zudem einen vierten Verbindungsabschnitt auf, der eine Entlüftungsleitung mit der Schieberkolbenaufnahme über zumindest eine vierte schieberkolbenaufnahmeseitige Verbindungsöffnung fluidisch verbindet, die in Bewegungsrichtung des Schieberkolbens zwischen der zumindest einen ersten schieberkolbenaufnahmeseitigen Verbindungsöffnung und der zumindest zweiten schieberkolbenaufnahmeseitigen Verbindungsöffnung angeordnet ist, wobei der Schieberkolben derart konfiguriert ist, dass in zumindest einer zweiten Position des Schieberkolbens in der Bewegungsrichtung die Angleichvolumenaufnahmekammer über den dritten Verbindungsabschnitt und den vierten Verbindungsabschnitt fluidisch mit der Entlüftungsleitung verbindbar ist und die fluidische Verbindung der Angleichvolumenaufnahmekammer über den dritten Verbindungsabschnitt und den zweiten Verbindungsabschnitt mit der Steuerkammer trennbar ist.

Der Schieberkolben ist somit zumindest bidirektional zwischen der zumindest einen ersten Position, in der die Angleichvolumenaufnahmekammer fluidisch mit der Steuerkammer verbunden ist, und der zumindest einen zweiten Position, in der die Angleichvolumenaufnahmekammer mit der Entlüftungsleitung fluidisch verbunden und die fluidische Verbindung zwischen der Angleichvolumenaufnahmekammer und der Steuerkammer getrennt ist, bewegbar. Durch die Bewegung des Schieberkolbens in die zumindest eine zweite Position kann dadurch das von der Steuerkammer aufgenommene Druckmedium abgeleitet und somit der dadurch bedingte Druck in der Angleichvolumenaufnahmekammer abgebaut werden. Da in dieser Position die fluidische Verbindung zwischen der Angleichvolumenaufnahmekammer und der Steuerkammer getrennt ist, wird der Steuerkammerdruck aufrechterhalten bzw. nicht beeinflusst.

Als Druckmedium kann Druckluft eingesetzt werden, wobei das Funktionsprinzip gleichermaßen auf Flüssigkeiten eines Hydrauliksystems übertragbar ist. Entsprechend sind auch die vorstehenden und folgenden Ausführungen zur Druckmedienbremse allgemein bzw. zum Angleichventil nicht auf Druckluft beschränkt und ebenso auf Flüssigkeiten als Druckmedium anwendbar. Folglich ist auch der Begriff des Entlüftens bzw. der Entlüftungsleitung somit nicht auf gasförmige Druckmedien beschränkt und betrifft gleichermaßen eine Abführung flüssiger Druckmedien, ggf. unter Berücksichtigung anderweitiger Ableitungseinrichtungen.

Über die Anordnung der vierten schieberkolbenaufnahmeseitigen Verbindungsöffnung zwischen der zumindest einen ersten schieberkolbenaufnahmeseitigen Verbindungsöffnung und der zumindest zweiten schieberkolbenaufnahmeseitigen Verbindungsöffnung in Bewegungsrichtung des Schieberkolbens kann dem Angleichventil eine entsprechende Schaltreihenfolge vorgegeben werden. Ausgehend von der zumindest einen ersten Position wird somit bei einer weiteren Bewegung des Schieberkolbens in einer Richtung von der zweiten schieberkolbenaufnahmeseitigen Verbindungsöffnung zur ersten schieberkolbenaufnahmeseitigen Verbindungöffnung in direkter Schaltfolge die zumindest eine zweite Position erreicht.

Alternativ oder ergänzend zur Entlüftung der Angleichvolumenaufnahmekammer über die an den vierten Verbindungsabschnitt angeschlossene Entlüftungsleitung kann die Angleichvolumenaufnahmekammer auch eine separate Entlüftungseinrichtung aufweisen, über die die Angleichvolumenaufnahmekammer zur erneuten Aufnahme eines Druckmediums aus der Steuerkammer entlüftet werden kann. Die separate Entlüftungseinrichtung ist demnach eine Entlüftungseinrichtung, bei der das Druckmedium zur Entlüftung nicht über die Schieberkolbenaufnahme und/oder den Schieberkolben entlüftet wird, sondern einen anderweitigen Entlüftungsausgang aufweist. Die separate Entlüftungseinrichtung kann beispielsweise manuell oder gemäß einer vorbestimmten Ansteuerungslogik betätigbar sein.

In einer Ausgestaltung ist die zumindest eine dritte schieberkolbenaufnahmeseitige Verbindungsöffnung in Bewegungsrichtung des Schieberkolbens zwischen der zumindest einen zweiten schieberkolbenaufnahmeseitigen Verbindungsöffnung und der zumindest einen ersten schieberkolbenaufnahmeseitigen Verbindungsöffnung, insbesondere zwischen der zumindest einen zweiten schieberkolbenaufnahmeseitigen Verbindungsöffnung und der zumindest einen vierten schieberkolbenaufnahmeseitigen Verbindungsöffnung, angeordnet.

Über die Anordnung der dritten schieberkolbenaufnahmeseitigen Verbindungsöffnung zwischen der zumindest einen zweiten schieberkolbenaufnahmeseitigen Verbindungsöffnung und der zumindest einen ersten schieberkolbenaufnahmeseitigen Verbindungsöffnung ergibt sich eine kompakte Bauweise des Angleichventils.

Insbesondere in Verbindung mit der vorstehend beschriebenen Entlüftungsmöglichkeit der Angleichvolumenaufnahmekammer über die vierte schieberkolbenaufnahmeseitige Verbindungsöffnung können über eine Anordnung der dritten schieberkolbenaufnahmenseitigen Verbindungsöffnung zwischen der zumindest einen zweiten schieberkolbenaufnahmeseitigen Verbindungsöffnung und der zumindest einen vierten schieberkolbenaufnahmeseitigen Verbindungsöffnung auch kurze Hübe des Schieberkolbens realisiert werden. Jeweils ausgehend von der dritten schieberkolbenaufnahmeseitigen Verbindungsöffnung ergibt sich der Hub des Schieberkolbens dabei durch die Betragssumme der Bewegung des Schieberkolbens in Richtung der zweiten schieberkolbenaufnahmeseitigen Verbindungsöffnung zum Erreichen der zumindest einen ersten Position und der entgegengesetzten Bewegung des Schieberkolbens in Richtung der vierten schieberkolbenaufnahmeseitigen Verbindungsöffnung zum Erreichen der zumindest einen zweiten Position. Der Betrag einer Bewegung in eine der jeweiligen Richtungen kann auch null sein. Beispielsweise kann eine erste Bewegungsendposition des Schieberkolbens zu der zumindest einen ersten Position korrespondieren. In dieser ersten Bewegungsendposition ist also die Angleichvolumenaufnahmekammer fluidisch mit der Steuerkammer verbunden. Zum Erreichen der zumindest einen zweiten Position, in der die Angleichvolumenaufnahmekammer mit der Entlüftungsleitung verbunden wird, entspricht der Hub somit der Bewegung des Schieberkolbens von der ersten Bewegungsendposition in die zumindest eine zweite Position. In einer solchen Konfiguration ist der Hub umso kürzer, je geringer der Abstand zwischen der vierten schieberkolbenaufnahmeseitigen Verbindungsöffnung und der dritten schieberkolbenaufnahmeseitigen Verbindungsöffnung ist.

Insbesondere ist der Schieberkolben über ein federelastisches Element in Richtung der ersten Position in der Bewegungsrichtung vorgespannt.

Über das federelastische Element kann der Schieberkolben, in Abhängigkeit der weiteren auf den Schieberkolben wirkenden Druckverhältnisse in der Schieberkolbenaufnahme, in der ersten Position gehalten und/oder in diese bewegt werden. Das federelastische Element kann dazu als Druckfeder ausgebildet sein, die in der Bewegungsrichtung des Schieberkolbens zwischen einer der ersten schieberkolbenaufnahmeseitigen Verbindungsöffnung zugewandten Stirnseite des Schieberkolbens und einem der Stirnseite gegenüberliegenden Abschnitt der Schieberkolbenaufnahme angeordnet ist. Die Federkraft der Druckfeder wirkt dabei in Richtung der zweiten schieberkolbenaufnahmeseitigen Verbindungsöffnung in Bewegungsrichtung des Schieberkolbens. Alternativ kann das federelastische Element auch als Zugfeder ausgebildet sein, die dann zwischen einer der zweiten schieberkolbenaufnahmeseitigen Verbindungsöffnung zugewandten Stirnseite des Schieberkolbens und einem der Stirnseite gegenüberliegenden Abschnitt der Schieberkolbenaufnahme angeordnet ist.

In einer Ausführung ist der Schieberkolben durch einen mit dem zweiten Verbindungsabschnitt fluidisch verbundenen zweiten Schieberkolbenaufnahmeabschnitt mit einem zum Druck der Steuerkammer korrespondierenden Druck beaufschlagbar.

Über den hierüber auf den Schieberkolben aufbringbaren Druck kann der Schieberkolben in Abhängigkeit der in der Schieberkolbenaufnahme vorliegenden Druckverhältnisse bewegt werden. Der zum Druck der Steuerkammer korrespondierende Druck kann dabei ein Druck sein, der direkt von der Steuerkammer in den zweiten Schieberkolbenaufnahmeabschnitt eingeleitet wird und hierzu gleich ist. Alternativ kann der in den zweiten Schieberkolbenaufnahmeabschnitt übertragene Druck aber beispielsweise auch durch Druckminderer reduziert oder anderweitig angepasst werden. Ebenso kann die Druckbeaufschlagung indirekt erfolgen.

Über die Druckbeaufschlagung des zweiten Schieberkolbenaufnahmeabschnitts kann der Schieberkolben beispielsweise von der zumindest einen ersten Position in die zumindest eine zweite Position bewegt werden. In einer exemplarischen einfachen Ausgestaltung ist der zweite Schieberkolbenaufnahmeabschnitt hierzu auf einer Seite der Schieberkolbenaufnahme vorgesehen, die der der zweiten

schieberkolbenaufnahmeseitigen Verbindungsöffnung zugewandten Stirnseite des Schieberkolbens zugewandt ist. Mit anderen Worten bewegt sich die der zweiten schieberkolbenaufnahmeseitigen Verbindungsöffnung zugewandte Stirnseite des Schieberkolbens im zweiten Schieberkolbenaufnahmeabschnitt. In der Bewegungsrichtung des Schieberkolbens wird der zweite Schieberkolbenaufnahmeabschnitt auf einer der Stirnseite des Schieberkolbens abgewandten Seite durch einen Abschnitt begrenzt, der gleichzeitig als ein zweiter Anschlag für den Schieberkolben fungiert. Der Abschnitt kann durch das Gehäuse des Angleichventils gebildet werden. Insbesondere kann der Abschnitt aber auch durch ein Element gebildet werden, das in Bezug auf die Bewegungsrichtung des Schieberkolbens unterschiedliche axiale Positionen einnehmen kann, um die Bewegungsbegrenzung des Schieberkolbens unterschiedlich einstellen zu können. Beispielsweise kann ein solcher Abschnitt in das Gehäuse des Angleichventils eingeschraubt werden, wobei die Einschraubtiefe die maximale Bewegung des Steuerkolbens begrenzt. Bevorzugt definiert die Anlage der der zweiten schieberkolbenaufnahmeseitigen Verbindungsöffnung zugewandten Stirnseite an dem Abschnitt bzw. dem dadurch gebildeten zweiten Anschlag die zumindest eine erste Position. Durch den zum Druck der Steuerkammer korrespondierenden Druck, mit dem der zweite Schieberkolbenabschnitt beaufschlagbar ist, kann nun der Schieberkolben von der zumindest einen ersten Position in die zumindest eine zweite Position bewegt werden. Mit anderen Worten kann der Schieberkolben direkt über den Steuerkammerdruck bewegt werden. Die Bewegung des Schieberkolbens ist dabei von den jeweiligen Druckverhältnissen bzw. dadurch bedingten Kraftverhältnissen abhängig, wie dies später noch beschrieben wird. Demnach erfolgt die Bewegung des Schieberkolbens durch den Steuerkammerdruck in Abhängigkeit der in einem jeweiligen Zustand des Angleichventils dem Steuerkammerdruck entgegenwirkenden Kräfte.

Zur Druckbeaufschlagung des zweiten Schieberkolbenaufnahmeabschnitts kann der Schieberkolben derart konfiguriert sein, dass er eine fluidische Verbindung des zweiten Verbindungsabschnitts mit dem zweiten Schieberkolbenaufnahmeabschnitt zumindest über einen Bewegungsabschnitt des Schieberkolbens von der zumindest einen ersten Position in die zumindest eine zweite Position freigibt. Hierzu kann der Schieberkolben beispielsweise über zumindest den Bewegungsabschnitt einen in Bezug auf die Längsachse radialen Durchmesser aufweisen, der kleiner als der Abstand der radialen Seitenwände der Schieberkolbenaufnahme in diesem Bereich ist. Hierdurch wird ein Spalt gebildet, der die fluide Verbindung des zweiten Verbindungsabschnitts mit dem zweiten Schieberkolbenaufnahmeabschnitt ermöglicht. Alternativ kann der Schieberkolben auch nur eine abschnittsweise Aussparung aufweisen, die zumindest über den Bewegungsabschnitt einen entsprechenden Spalt ausbildet. Dieser Spalt ist dann nicht um den Schieberkolben herum umlaufend, bildet aber zumindest eine zur Druckbeaufschlagung ausreichende fluide Verbindung aus. Weiterhin alternativ oder ergänzend kann die fluidische Verbindung auch in einem Bereich des zweiten Schieberkolbenaufnahmeabschnitts ausgebildet sein, der nicht vom Schieberkolben überdeckt wird.

Insbesondere wirkt eine aus einem zu einem vorbestimmten Mindestdruck der Steuerkammer korrespondierenden vorbestimmten Mindestdruck resultierende Gegenkraft der Federkraft des federelastischen Elements entgegen. Dabei ist die Federkraft des federelastischen Elements kleiner als die Gegenkraft.

Die über den zweiten Schieberkolbenaufnahmeabschnitt auf den Schieberkolben wirkende Druckkraft über die Druckbeaufschlagung aus der Steuerkammer resultiert somit in einer Gegenkraft. Damit der Schieberkolben in Bewegungsrichtung entgegen der Federkraft bewegt werden kann, ist das Angleichventil entsprechend derart konfiguriert, dass die Federkraft kleiner als die Gegenkraft ist, die über einen vorbestimmten Mindestdruck aufgebracht wird. Sofern lediglich die Federkraft auf den Schieberkolben wirkt, wird der Schieberkolben durch den vorbestimmten Mindestdruck der Steuerkammer in Richtung der ersten schieberkolbenaufnahmeseitigen Verbindungsöffnung bewegt. Insbesondere wird der Schieberkolben dabei in die zumindest eine zweite Position bewegt und dort gehalten. Zum Halten des Schieberkolbens in der zumindest einen zweiten Position kann auf einer der ersten schieberkolbenaufnahmeseitigen Verbindungsöffnung zugewandten Stirnseite des Schieberkolbens gegenüberliegenden Seite der Schieberkolbenaufnahme ein erster Anschlag vorgesehen sein, der eine Bewegung des Schieberkolbens über die zumindest eine zweite Position hinaus begrenzt.

Der vorbestimmte Mindestdruck kann einem Mindestdruck entsprechen, der regelmäßig in der Steuerkammer mindestens herrscht. Alternativ kann der vorbestimmte Mindestdruck auch größer als der regelmäßige Mindestdruck in der Steuerkammer sein. In einem solchen Fall wird der Schieberkolben erst dann in die zumindest eine zweite Position bewegt, wenn der vorbestimmte Mindestdruck erreicht oder überschritten wird.

Gemäß einer Weiterbildung weist der zweite Verbindungsabschnitt zumindest eine zweite schieberkolbenaufnahmeseitige Sekundärverbindungsöffnung auf, die den zweiten Schieberkolbenaufnahmeabschnitt fluidisch mit der Steuerkammer verbindet.

Demnach sind die fluidische Verbindung zwischen dem zweiten Schieberkolbenaufnahmeabschnitt und der Steuerkammer zur Druckbeaufschlagung des zweiten Schieberkolbenaufnahmeabschnitts unabhängig von der zweiten schieberkolbenaufnahmeseitigen Verbindungsöffnung. Der zweite Verbindungsabschnitt kann dazu zwei separate Leitungen umfassen, die jeweils mit der zweiten schieberkolbenaufnahmeseitigen Verbindungsöffnung und der zweiten schieberkolbenaufnahmeseitigen Sekundärverbindungsöffnung in der Schieberkolbenaufnahme münden. Alternativ kann der zweite Verbindungsabschnitt aber auch steuerkammerseitig einen gemeinsamen Eingang aufweisen, wobei sich eine Durchleitung dann entsprechend in einen Leitungszweig mit der zweiten schieberkolbenaufnahmeseitigen Verbindungsöffnung und einen Leitungszweig mit der zweiten schieberkolbenaufnahmeseitigen Sekundärverbindungsöffnung verzweigt.

Insbesondere ist der Schieberkolben derart konfiguriert, dass in der zumindest einen ersten Position des Schieberkolbens die fluidische Verbindung zwischen dem zweiten Schieberkolbenaufnahmeabschnitt und der Steuerkammer über die zumindest eine zweite schieberkolbenaufnahmeseitige Sekundärverbindungsöffnung durch den Schieberkolben von der fluidischen Verbindung über die zumindest eine dritte schieberkolbenaufnahmeseitige Verbindungsöffnung und die zumindest eine zweite schieberkolbenaufnahmeseitige Verbindungsöffnung trennbar ist.

In der zumindest einen ersten Position wird demnach der zweite Schieberkolbenaufnahmeabschnitt lediglich über die zweite schieberkolbenaufnahmeseitige Sekundärverbindungsöffnung mit einem zum Steuerkammerdruck korrespondierenden Druck beaufschlagt, während die fluidische Verbindung zwischen der Steuerkammer und der Angleichvolumenaufnahmekammer lediglich über die zumindest eine zweite schieberkolbenaufnahmeseitige Verbindungsöffnung erfolgt.

In der zumindest einen zweiten Position des Schieberkolbens, in der die fluidische Verbindung zwischen der Steuerkammer und der Angleichvolumenaufnahmekammer getrennt ist, kann auch über die zweite schieberkolbenaufnahmeseitige Verbindungsöffnung ein zum Steuerkammerdruck korrespondierender Druck in den zweiten Schieberkolbenaufnahmeabschnitt übertragbar sein. Alternativ kann die schieberkolbenaufnahmeseitige Verbindungsöffnung in der zumindest einen zweiten Position auch weiterhin von dem zweiten Schieberkolbenaufnahmeabschnitt getrennt sein.

Gemäß einer Weiterbildung sind die zumindest eine zweite schieberkolbenaufnahmeseitige Verbindungsöffnung und die zumindest eine zweite schieberkolbenaufnahmeseitige Sekundärverbindungsöffnung in Bewegungsrichtung des Schieberkolbens voneinander beabstandet. Insbesondere ist die schieberkolbenaufnahmeseitige Sekundärverbindungsöffnung auf einer der zumindest einen ersten schieberkolbenaufnahmeseitigen Verbindungsöffnung abgewandten Seite der zumindest einen zweiten schieberkolbenaufnahmeseitigen Verbindungsöffnung angeordnet.

Durch die Beabstandung der zweiten schieberkolbenaufnahmeseitigen Verbindungsöffnung von der zumindest einen zweiten schieberkolbenaufnahmeseitigen Sekundärverbindungsöffnung in Bewegungsrichtung des Schieberkolbens kann die vorstehende Trennung zwischen der jeweiligen fluidischen Verbindung über die jeweiligen Verbindungsöffnungen über die hierzu angeführten Schieberkolbenausgestaltungen in einfacher Weise erfolgen. Dies bedingt sich insbesondere auch über die optionale Anordnung der schieberkolbenaufnahmeseitigen Sekundärverbindungsöffnung auf einer der zumindest einen ersten schieberkolbenaufnahmeseitigen Verbindungsöffnung abgewandten Seite der zumindest einen zweiten schieberkolbenaufnahmeseitigen Verbindungsöffnung.

In einer Ausgestaltung ist der Schieberkolben durch einen mit dem ersten Verbindungsabschnitt fluidisch verbundenen ersten Schieberkolbenaufnahmeabschnitt mit einem zum Druck der Hauptdruckmedienleitung korrespondierenden Druck beaufschlagbar.

Analog zur Druckbeaufschlagung des zweiten Schieberkolbenaufnahmeabschnitts mit einem zum Steuerkammerdruck korrespondierenden Druck kann der zum Druck der Hauptdruckmedienleitung korrespondierender Druck zur Druckbeaufschlagung des ersten Schieberkolbenaufnahmeabschnitts gleich dem Druck der Hauptdruckmedienleitung sein. Alternativ kann der zum Druck der Hauptdruckmedienleitung korrespondierende Druck aber auch über einen Druckminderer um einen vorbestimmten Betrag gemindert sein. Die Druckbeaufschlagung kann direkt oder indirekt erfolgen.

Durch die Druckbeaufschlagung des ersten Schieberkolbenaufnahmeabschnitts kann der Schieberkolben in der zumindest einen ersten Position gehalten und/oder in die zumindest eine erste Position bewegt werden. Der erste Schieberkolbenaufnahmeabschnitt ist hierzu in der Bewegungsrichtung des Schieberkolbens auf einer der zumindest einen zweiten schieberkolbenaufnahmeseitigen Verbindungsöffnung abgewandten Seite des Schieberkolbens angeordnet. Bei einer Ausgestaltung des Angleichventils mit dem vorstehend beschriebenen zweiten Schieberkolbenaufnahmeabschnitt liegen sich der erste Schieberkolbenaufnahmeabschnitt und der zweite Schieberkolbenaufnahmeabschnitt in Bewegungsrichtung des Schieberkolbens somit gegenüber. In einer solchen Konfiguration kann die dem ersten Schieberkolbenaufnahmeabschnitt zugewandte Seite des Schieberkolbens in der Bewegungsrichtung mit einem zum Druck der Hauptdruckmedienleitung korrespondierenden Druck und die dem zweiten Schieberkolbenaufnahmeabschnitt zugewandte Seite des Schieberkolbens mit einem zum Druck der Steuerkammer korrespondierenden Druck beaufschlagt werden. Über die jeweils am Schieberkolben anliegenden Druckverhältnisse kann der Schieberkolben in der Schieberkolbenführung bewegt werden. Durch Anordnung des ebenfalls vorstehend beschriebenen federelastischen Elements im ersten Schieberkolbenaufnahmeabschnitt kann die Bewegung des Schieberkolbens über eine Druckbeaufschlagung des zweiten Schieberkolbenaufnahmeabschnitts weiter beeinflusst werden.

In einer Ausführung weist der Steuerkolben zumindest eine zur Bewegungsrichtung radial außen liegende zumindest abschnittsweise umlaufende Nut auf, über die in der zumindest einen ersten Position des Schieberkolbens in der Bewegungsrichtung die Angleichvolumenaufnahmekammer über den dritten Verbindungsabschnitt und den zweiten Verbindungsabschnitt fluidisch mit der Steuerkammer verbindbar ist und/oder in der zumindest einen zweiten Position des Schieberkolbens die Angleichvolumenaufnahmekammer über den dritten Verbindungsabschnitt und den vierten Verbindungsabschnitt fluidisch mit der Entlüftungsleitung verbindbar ist.

Über die zumindest eine zumindest abschnittsweise umlaufende Nut kann die fluidische Verbindung zwischen der zweiten schieberkolbenaufnahmeseitigen Verbindungsöffnung und der dritten schieberkolbenaufnahmeseitigen Verbindungsöffnung in einfacher Weise ausgebildet werden. In axialer Richtung in Bezug auf die Längsachse des Schieberkolbens weist die Nut dabei zumindest eine Breite auf, die die zweite schieberkolbenaufnahmeseitige Verbindungsöffnung und die dritte schieberkolbenaufnahmeseitige Verbindungsöffnung in der zumindest einen ersten Position überdeckt. Das Druckmedium kann hierüber in der Schieberkolbenaufnahme entlang der Nut von der zweiten schieberkolbenaufnahmeseitigen Verbindungsöffnung zur dritten schieberkolbenaufnahmeseitigen Verbindungsöffnung strömen und umgekehrt. Die Nut ist zumindest soweit radial umlaufend, dass die zweite schieberkolbenaufnahmeseitige Verbindungsöffnung und die dritte schieberkolbenaufnahmeseitige Verbindungsöffnung über die Nut fluidisch verbindbar sind. Bei gegenüberliegenden Verbindungsöffnungen kann beispielsweise ein radialer Umlauf der Nut von zumindest 180° vorgesehen werden. Um die Einbautoleranz des Schieberkolbens zu erhöhen und/oder auch bei Verdrehung des Schieberkolbens in der Schieberkolbenaufnahme eine fluidische Verbindung sicherstellen zu können, kann eine radiale Erweiterung oder ein vollständiger radialer Umlauf der Nut ausgebildet werden.

Die fluidische Verbindung der dritten schieberkolbenaufnahmeseitigen Verbindungsöffnung mit der vierten schieberkolbenaufnahmeseitigen Verbindungsöffnung in der zumindest einen zweiten Position kann über die gleiche Nut, die zur fluidischen Verbindung der zweiten schieberkolbenaufnahmeseitigen Verbindungsöffnung und der dritten schieberkolbenaufnahmeseitigen Verbindungsöffnung vorgesehen ist, erfolgen. In einer solchen Konfiguration weist die Nut in axialer Richtung zumindest eine Breite auf, die sowohl die zweite schieberkolbenaufnahmeseitige Verbindungsöffnung und die dritte schieberkolbenaufnahmeseitige Verbindungsöffnung in der zumindest einen ersten Position als auch die dritte schieberkolbenaufnahmeseitige Verbindungsöffnung und die vierte schieberkolbenaufnahmeseitige Verbindungsöffnung in der zumindest einen zweiten Position überdeckt. Analog dazu ist auch der radialer Umlauf der Nut auf Sicherstellung der jeweiligen fluidischen Verbindung in der zumindest einen ersten Position und in der zumindest einen zweiten Position auf die Anordnung der jeweiligen schieberkolbenaufnahmeseitigen Verbindungsöffnung in der Umlaufrichtung anzupassen.

Alternativ zur fluidischen Verbindung der zweiten schieberkolbenaufnahmeseitigen Verbindungsöffnung und der dritten schieberkolbenaufnahmeseitigen Verbindungsöffnung in der zumindest einen ersten Position sowie der dritten schieberkolbenaufnahmeseitigen Verbindungsöffnung und der vierten schieberkolbenaufnahmeseitigen Verbindungsöffnung in der zumindest einen zweiten Position über eine Nut, kann der Schieberkolben für die jeweiligen fluidischen Verbindungen auch separate Nuten aufweisen, die entsprechend in Bewegungsrichtung des Schieberkolbens voneinander beabstandet sind.

Alternativ oder ergänzend weist der Steuerkolben zumindest einen zumindest abschnittsweise innenliegenden Fluidkanal auf, über den in der zumindest einen ersten Position des Schieberkolbens in der Bewegungsrichtung die Angleichvolumenaufnahmekammer über den dritten Verbindungsabschnitt und den zweiten Verbindungsabschnitt fluidisch mit der Steuerkammer verbindbar ist und/oder in der zumindest einen zweiten Position des Schieberkolbens die Angleichvolumenaufnahmekammer über den dritten Verbindungsabschnitt und den vierten Verbindungsabschnitt fluidisch mit der Entlüftungsleitung verbindbar ist.

Bei einer jeweiligen fluidischen Verbindung strömt das Druckmedium somit nicht um den Schieberkolben, sondern durch diesen hindurch. Um eine Positionierungstoleranz der Öffnungen des Fluidkanals gegenüber den jeweiligen Verbindungsöffnungen zu erhöhen, können die Öffnungen des Fluidkanals auch von einer Nut oder Aussparung umgeben sein, um einen Einlaufbereich auszubilden. Analog zur Ausgestaltung des Schieberkolbens mit einer oder mehreren Nuten kann der Schieberkolben auch einen oder mehrere Fluidkanäle aufweisen. Sofern nur ein Fluidkanal vorgesehen ist, kann das Angleichventil beispielsweise zwei in Bewegungsrichtung des Schieberkolbens voneinander beabstandete dritte schieberkolbenaufnahmeseitige Verbindungsöffnungen oder der Schieberkolben zwei einer dritten schieberkolbenaufnahmeseitigen Verbindungsöffnung zugewandte Öffnungen des Fluidkanals aufweisen. In einer weiteren Variante kann die eine fluidische Verbindung über die vorstehend beschrieben Nut und die andere fluidische Verbindung über einen Fluidkanal vorgesehen werden.

In einem weiteren Aspekt betrifft die Erfindung ein Bremssystem für eine Druckmedienbremse für Schienenfahrzeuge, aufweisend ein vorstehend beschriebenes Angleichventil, eine Hauptdruckmedienleitung, die über eine hauptdruckmedienleitungsseitige Verbindungsöffnung mit dem ersten Verbindungsabschnitt des Angleichventils fluidisch verbunden ist, und eine Steuerkammer, die über eine steuerkammerseitige Verbindungsöffnung mit dem zweiten Verbindungsabschnitt fluidisch verbunden ist, wobei der Schieberkolben des Angleichventils im gelösten Zustand der Druckmedienbremse sowie bei einer Betriebsbremsung in die zumindest eine erste Position bewegbar und/oder in dieser haltbar ist, in der die Angleichvolumenaufnahmekammer über den dritten Verbindungsabschnitt und den zweiten Verbindungsabschnitt fluidisch mit der Steuerkammer verbindbar ist.

Durch die fluidische Verbindung der Steuerkammer und der Angleichvolumenaufnahmekammer in der zumindest einen ersten Position des Schieberkolbens wird die Angleichvolumenaufnahmekammer aus der Steuerkammer mit einen Druckmedium gefüllt. Die Drücke in der Angleichvolumenaufnahmekammer und der Steuerkammer gleichen sich aus. Die Bewegung des Schieberkolbens in die erste Position und/oder das Halten des Schieberkolbens in dieser Position kann über den Druck der Hauptmedienleitung erfolgen, der über den ersten Verbindungsabschnitt bzw. die erste schieberkolbenaufnahmeseitige Verbindungsöffnung den Schieberkolben mit einem in Richtung der zumindest einen ersten Position wirkenden Druck beaufschlagt. Hierdurch kann der Schieberkolben dann beispielsweise in Zusammenwirken mit dem zweiten Anschlag in der ersten Position gehalten werden.

Gemäß einer Weiterbildung weist das Bremssystem zudem eine Entlüftungsleitung auf, die über eine entlüftungsleitungsseitige Verbindungsöffnung mit dem zuvor angeführten vierten Verbindungsabschnitt des Angleichventils verbunden ist. Das Bremssystem ist dabei derart konfiguriert, dass bei einer Schnellbremsung der zum Druck der Hauptdruckmedienleitung korrespondierende Druck im ersten Schieberkolbenaufnahmeabschnitt des Angleichventils aufgehoben wird. Hierbei ist der Schieberkolben durch einen mit dem ersten Verbindungsabschnitt fluidisch verbundenen ersten Schieberkolbenaufnahmeabschnitt mit einem zum Druck der Hauptdruckmedienleitung korrespondierenden Druck beaufschlagbar, so dass der Schieberkolben durch den zum Druck der Steuerkammer korrespondierende Druck im zweiten Schieberkolbenaufnahmeabschnitt des Angleichventils in die zumindest eine zweite Position bewegbar ist. Hierdurch ist die Angleichvolumenaufnahmekammer entlüftbar. Der Schieberkolben ist dazu durch einen mit dem zweiten Verbindungsabschnitt fluidisch verbundenen zweiten Schieberkolbenaufnahmeabschnitt mit einem zum Druck der Steuerkammer korrespondierenden Druck beaufschlagbar.

Wie vorstehend beschrieben, kann der Schieberkolben durch den Druck der Hauptdruckmedienleitung in der ersten Position gehalten werden. Entfällt dieser Druck gemäß einer Schnellbremsung, bei der der anliegende Druck der Hauptdruckmedienleitung auf null abgesenkt wird, wirkt der zum Druck der Steuerkammer korrespondierende Druck auf den Schieberkolben. Dieser wird entsprechend in Richtung der zweiten Position bewegt, so dass die Angleichvolumenaufnahmekammer über die Entlüftungsleitung entlüftet wird. Der Schieberkolben kann dabei über den ersten Anschlag auf einer Seite des ersten Schieberkolbenaufnahmeabschnitts in der zweiten Position gehalten werden. Sofern das Angleichventil ein vorstehend beschriebenes federelastische Element aufweist, das den Schieberkolben in Richtung der zumindest einen ersten Position vorspannt, ist dieses dabei derart konfiguriert, dass der zum Druck der Steuerkammer korrespondierende Druck bei Aufhebung des Drucks der Hauptdruckmedienleitung die Vorspannkraft des Federelements überwindet.

In einer Ausgestaltung ist das Bremssystem derart konfiguriert, dass der Schieberkolben über erneute Druckbeaufschlagung des ersten Schieberkolbenaufnahmeabschnitts mit einem vorbestimmten zum Druck der Hauptdruckmedienleitung korrespondierenden Druck wieder in die zumindest eine erste Position bewegbar ist.

Beispielsweise liegt bei einem Lösen der Bremse nach einer Schnellbremsung wieder der Druck der Hauptdruckmedienleitung bzw. ein dazu korrespondierender Druck über den zweiten Schieberkolbenaufnahmeabschnitt am Schieberkolben an. Der Druck ist dabei größer als der durch die Steuerkammer bedingte Gegendruck, so dass sich der Schieberkolben wieder in die erste Position bewegen kann. Dadurch kann die zuvor entlüftete Angleichvolumenaufnahmekammer wieder mit dem Druckmedium aus der Steuerkammer gefüllt werden. Hierdurch wird der Steuerkammerdruck um einen festen Betrag abgesenkt. Entsprechend kann eine etwaige Überladung der Steuerkammer bzw. des Steuerkammerdrucks beseitigt werden, wie sie beispielsweise nach einem Führerstandswechsel auftreten kann. Die Unerschöpfbarkeit der Bremse ist gegeben.

Im Folgenden wird die Erfindung unter Bezugnahme auf die beigefügten Figuren näher erläutert. Die Figuren zeigen im Einzelnen:
**Figur 1** eine schematische Querschnittsansicht eines Angleichventils gemäß einer exemplarischen Ausführungsform, wobei sich der Schieberkolben in einer ersten Position befindet;
**Figur 2** eine schematische Querschnittsansicht des Angleichventils gemäß Figur 1, wobei sich der Schieberkolben in einer zweiten Position befindet.

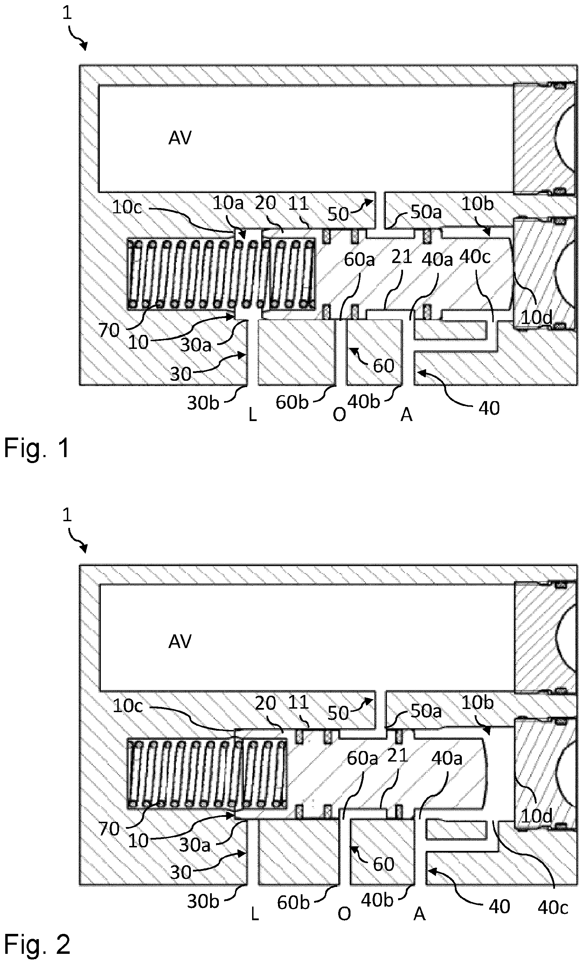

**Figur 1** zeigt eine schematische Querschnittsansicht eines Angleichventils 1 gemäß einer exemplarischen Ausführungsform. Das Angleichventil 1 weist eine Schieberkolbenaufnahme 10 mit einer Schieberkolbenführung 11 auf, in der ein Schieberkolben 20 bidirektional beweglich geführt wird. In Bezug auf eine Längsachse des Schieberkolbens 20, die sich in die bidirektionale Bewegungsrichtung des Schieberkolbens 20 erstreckt, weist der Schieberkolben 20 radiale Dichtflächen zur Führung in der Schieberkolbenführung 11 auf. Die Bewegung des Schieberkolbens 20 in der Schieberkolbenaufnahme 10 wird durch einen ersten Anschlag 10c und einen zweiten Anschlag 10d begrenzt. Über ein federelastisches Element 70, das hier als Druckfeder ausgebildet ist, ist der Schieberkolben in Richtung des zweiten Anschlags vorgespannt. Das federelastische Element ist hierzu zwischen einer dem ersten Anschlag 10c zugewandten Stirnfläche des Schieberkolbens 20 und einer dieser Stirnseite gegenüberliegenden Seite der Schieberkolbenaufnahme 10 angeordnet.

Zudem weist das Angleichventil 1 eine Angleichvolumenaufnahmekammer Av auf, die über einen dritten Verbindungsabschnitt 50 mit einer dritten schieberkolbenaufnahmeseitige Verbindungsöffnung 50a mit der Schieberkolbenaufnahme 10 verbunden ist. Des Weiteren ist eine Hauptdruckmedienleitung L über einen ersten Verbindungsabschnitt 30 mit einer ersten schieberkolbenaufnahmeseitigen Verbindungsöffnung 30a und einer hauptdruckmedienleitungsseitigen Verbindungsöffnung 30b mit der Schieberkolbenaufnahme 10 verbunden. Ebenso ist eine Steuerkammer A über einen zweiten Verbindungsabschnitt 40 mit einer zweiten schieberkolbenaufnahmeseitigen Verbindungsöffnung 40a und einer steuerkammerseitigen Verbindungsöffnung 40b mit der Schieberkolbenaufnahme 10 verbunden. Auch ist eine Entlüftungsleitung O über einen vierten Verbindungsabschnitt 60 mit einer vierten schieberkolbenaufnahmeseitigen Verbindungsöffnung 60a und einer entlüftungsleitungsseitigen Verbindungsöffnung 60b mit der Schieberkolbenaufnahme 10 verbunden.

In einer Bewegungsrichtung des Schieberkolbens vom ersten Anschlag 10c zum zweiten Anschlag 10d hin ist zuerst die erste schieberkolbenaufnahmeseitige Verbindungsöffnung 30a, dann die vierte schieberkolbenaufnahmeseitige Verbindungsöffnung 60a, gefolgt von der dritten schieberkolbenaufnahmeseitigen Verbindungsöffnung 50a und schließlich die zweite schieberkolbenaufnahmeseitige Verbindungsöffnung 40a angeordnet. Die vorstehende Reihenfolge bedingt eine zwangsläufige Schaltreihenfolge durch den Schieberkolben 20. In der gezeigten Ausführungsform sind zudem die erste schieberkolbenaufnahmeseitige Verbindungsöffnung 30a, die vierte schieberkolbenaufnahmeseitige Verbindungsöffnung 60a und die zweite schieberkolbenaufnahmeseitige Verbindungsöffnung 40a auf einer in Bezug auf die Längsachse des Schieberkolbens 20 radialen Seite der Schieberkolbenaufnahme 10 angeordnet und die dritte schieberkolbenaufnahmeseitige Verbindungsöffnung auf der dazu gegenüberliegenden Seite. In einer alternativen Ausführungsform kann die radiale Anordnung aber auch hiervon abweichen, beispielsweise bedingt durch jeweilige Bauraum- und/oder Anschlussvorgaben.

Zur fluidischen Verbindung der Angleichvolumenaufnahmekammer Av mit der Steuerkammer A oder der Entlüftungsleitung O, wie dies später noch beschrieben wird, weist der Schieberkolben 20 eine Nut 21 auf, die den Schieberkolben 20 in Bezug auf seine Längsachse radial umlaufend umgibt. In Bezug auf die Längsachse des Schieberkolbens 20 weist die Nut 21 in axialer Richtung eine Breite auf, die zumindest gleich dem größeren der axialen Abstände von der dritten schieberkolbenaufnahmeseitigen Verbindungsöffnung 50a zur zweiten schieberkolbenaufnahmeseitigen Verbindungsöffnung 40a und von der dritten schieberkolbenaufnahmeseitigen Verbindungsöffnung 50a zur vierten schieberkolbenaufnahmeseitigen Verbindungsöffnung 60a ist. Sind die jeweiligen Abstände gleich ist die Breite der Nut 21 zumindest gleich diesem Abstand. Die Nut 21 ist in Bezug auf die Längsachse des Schieberkolbens 20 in einer axialen Position angeordnet, so dass die Breite der Nut 21 in einer zumindest einen ersten Position die dritte schieberkolbenaufnahmeseitige Verbindungsöffnung 50a und die zweite schieberkolbenaufnahmeseitige Verbindungsöffnung 40a zumindest teilweise überdeckt. Entsprechend ist hierüber die Angleichvolumenaufnahmekammer Av mit der Steuerkammer A fluidisch verbindbar. Darüber hinaus ist die axiale Position der Nut 21 derart vorgesehen, so dass die Breite der Nut 21 in einer zumindest einen zweiten Position die dritte schieberkolbenaufnahmeseitige Verbindungsöffnung 50a und die vierte schieberkolbenaufnahmeseitige Verbindungsöffnung 60a zumindest teilweise überdeckt. Entsprechend ist hierüber die Angleichvolumenaufnahmekammer Av mit der Entlüftungsleitung O fluidisch verbindbar.

Gemäß der exemplarischen Ausführungsform weist der zweite Verbindungsabschnitt 40 neben der zweiten schieberkolbenaufnahmeseitigen Verbindungsöffnung 40a noch eine zweite schieberkolbenaufnahmeseitige Sekundärverbindungsöffnung 40c auf. Die zweite schieberkolbenaufnahmeseitige Sekundärverbindungsöffnung 40c ist in Bezug auf die Längsachse des Schieberkolbens 20 in axialer Richtung von der zweiten schieberkolbenaufnahmeseitigen Verbindungsöffnung 40a beabstandet und in axialer Richtung zwischen der zweiten schieberkolbenaufnahmeseitigen Verbindungsöffnung 40a und dem zweiten Anschlag 10d angeordnet. Die zweite schieberkolbenaufnahmeseitige Sekundärverbindungsöffnung 40c mündet in einem an den zweiten Anschlag 10d angrenzenden zweiten Schieberkolbenaufnahmeabschnitt 10b. Der Durchmesser des Schieberkolbens 21 ist an einem dem zweiten Anschlag 10d zugewandten Endabschnitt kleiner als der Durchmesser der Schieberkolbenaufnahme 10. Somit kann der Schieberkolben 21 über Einleitung eines Druckmediums aus der Steuerkammer A über den zweiten Schieberkolbenaufnahmeabschnitt 10b mit Druck beaufschlagt werden.

Ein dem ersten Anschlag 10c zugewandter Endabschnitt des Schieberkolbens 20 kann über die Hauptdruckmedienleitung L bzw. den ersten Verbindungsabschnitt 30 mit Druck beaufschlagt werden. Hierzu kann ein Druckmedium über die erste schieberkolbenaufnahmeseitige Verbindungsöffnung 30a in einen ersten Schieberkolbenaufnahmeabschnitt 10a eingeleitet werden, der an den dem ersten Anschlag 10c zugewandten Endabschnitt des Schieberkolbens 20 angrenzt und in dem auch das federelastische Element 70 angeordnet ist. Das bei entsprechender Positionierung des Schieberkolbens 20 am ersten Anschlag 10a anliegende Ende des Schieberkolbens ist dabei derart konfiguriert, dass es eine Freilassung aufweist, die auch in dieser Position eine Einleitung eines Druckmediums über die erste schieberkolbenaufnahmeseitige Verbindungsöffnung 30a in den ersten Schieberkolbenaufnahmeabschnitt 10a ermöglicht.

Im Folgenden wird die Funktionsweise des Angleichventils ausgehend von der in **Figur** 1 gezeigten Betriebsstellung, bei der sich der Schieberkolben 20 in der ersten Position befindet, beschrieben. Die gezeigte Betriebsstellung liegt im gelösten Zustand einer Bremse eines Schienenfahrzeugs oder einer Betriebsbremsung vor. Über den durch die Hauptdruckmedienleitung L in Verbindung mit dem ersten Verbindungsabschnitt 30 im ersten Schieberkolbenaufnahmeabschnitt auf den Schieberkolben 20 aufgebrachten Druck, der größer als ein aus der Steuerkammer A in den zweiten Schieberkolbenaufnahmeabschnitt 10b eingeleiteter Druck ist, wird der Schieberkolben 20 in Richtung des zweiten Anschlags 10d bewegt bzw. mit Erreichen des zweiten Anschlags 10d in dieser Position gehalten. Diese Position entspricht der ersten Position, in der die Angleichvolumenaufnahmekammer Av über die dritte schieberkolbenaufnahmeseitige Verbindungsöffnung 50a und über die zweite schieberkolbenaufnahmeseitige Verbindungsöffnung 40a mit der Steuerkammer A fluidisch verbunden ist. Die fluidische Verbindung erfolgt dabei durch die Überdeckung der dritten schieberkolbenaufnahmeseitigen Verbindungsöffnung 50a und der zweiten schieberkolbenaufnahmeseitigen Verbindungsöffnung 40a durch die umlaufende Nut 21. Über die fluidische Verbindung gleichen sich die Drücke in der Angleichvolumenaufnahmekammer Av und der Steuerkammer A an. In der ersten Position wird die vierte schieberkolbenaufnahmeseitige Verbindungsöffnung 60a über eine radiale Dichtfläche des Schieberkolbens 20 geschlossen.

Bei einer Schnellbremsung wird nun der über die Hauptdruckmedienleitung L in den ersten Schieberkolbenaufnahmeabschnitt 10a eingeleitete Druck auf null abgesenkt. Demnach wirkt dem Druck im zweiten Schieberkolbenverbindungsabschnitt 10b nun nur noch die Federkraft des federelastischen Elements 70 entgegen. Da diese kleiner als die durch den Steuerkammerdruck resultierende Gegenkraft ist, wird der Schieberkolben in Richtung des ersten Anschlags 10a bewegt, bis das dem ersten Anschlag 10a zugewandte Ende des Schieberkolbens 20 an diesem anliegt. Der Schieberkolben wird über den am gegenüberliegenden Ende des Schieberkolbens 20 anliegenden Steuerkammerdruck in dieser Position gehalten. Diese Position entspricht der zweiten Position.

In der zweiten Position, wie sie in **Figur 2** gezeigt ist, wird über die Verlagerung der Nut 21 die fluidische Verbindung zwischen der Angleichvolumenaufnahmekammer Av und der Steuerkammer A getrennt und die Angleichvolumenaufnahmekammer Av fluidisch mit der Entlüftungsleitung O verbunden. Die Entlüftung erfolgt über die vierte schieberkolbenaufnahmeseitige Verbindungsöffnung 60a und die entlüftungsleitungsseitige Verbindungsöffnung 60b des vierten Verbindungsabschnitts 60.

Wird die Bremse nach der Schnellbremsung wieder gelöst, wird der Druck aus der Hauptdruckmedienleitung wieder in den ersten Schieberkolbenaufnahmeabschnitt 10a eingeleitet und bewegt den Schieberkolben wieder in die erste Position. Folglich wird die zuvor entlüftete Angleichvolumenaufnahmekammer Av wieder mit dem Druckmedium aus der Steuerkammer A gefüllt und der Druck in der Steuerkammer A um einen entsprechenden Betrag abgesenkt. Hierüber kann eine etwaige Überladung des Steuerkammerdrucks beseitigt werden.

Die Erfindung ist nicht auf die beschriebene Ausführungsform beschränkt. Insbesondere sind zu der Ausführungsform, anderweitig beschriebenen Ausgestaltungen und Weiterbildungen der Erfindung beschriebene Merkmale untereinander kombinierbar, so wie in den beigefügten Ansprüchen beschrieben.

### BEZUGSZEICHENLISTE

- 1: Angleichventil
- 10: Schieberkolbenaufnahme
- 10a: erster Schieberkolbenaufnahmeabschnitt
- 10b: zweiter Schieberkolbenaufnahmeabschnitt
- 10c: erster Anschlag
- 10d: zweiter Anschlag
- 11: Schieberkolbenführung
- 20: Schieberkolben
- 21: Nut
- 30: erster Verbindungsabschnitt
- 30a: erste schieberkolbenaufnahmeseitige Verbindungsöffnung
- 30b: hauptdruckmedienleitungsseitige Verbindungsöffnung
- 40: zweiter Verbindungsabschnitt
- 40a: zweite schieberkolbenaufnahmeseitige Verbindungsöffnung
- 40b: steuerkammerseitige Verbindungsöffnung
- 40c: zweite schieberkolbenaufnahmeseitige Sekundärverbindungsöffnung
- 50: dritter Verbindungsabschnitt
- 50a: dritte schieberkolbenaufnahmeseitige Verbindungsöffnung
- 60: vierter Verbindungsabschnitt
- 60a: vierte schieberkolbenaufnahmeseitige Verbindungsöffnung
- 60b: entlüftungsleitungsseitige Verbindungsöffnung
- 70: federelastisches Element
- A: Steuerkammer
- Av: Angleichvolumenaufnahmekammer
- L: Hauptdruckmedienleitung
- O: Entlüftungsleitung

## Patentansprüche

1. Angleichventil (1) zum Angleich eines Steuerkammerdrucks einer Druckmedienbremse für Schienenfahrzeuge, aufweisend:
eine Schieberkolbenaufnahme (10) mit einer Schieberkolbenführung (11),
einen Schieberkolben (20), der in der Schieberkolbenführung (11) geführt wird und in einer durch die Schieberkolbenführung (11) vorgegebenen Bewegungsrichtung bidirektional bewegbar ist,
einen ersten Verbindungsabschnitt (30), der eine Hauptdruckmedienleitung (L) mit der Schieberkolbenaufnahme (10) über zumindest eine erste schieberkolbenaufnahmeseitige Verbindungsöffnung (30a) fluidisch verbindet,
einen zweiten Verbindungsabschnitt (40), der eine Steuerkammer (A) mit der Schieberkolbenaufnahme (10) über zumindest eine zweite schieberkolbenaufnahmeseitige Verbindungsöffnung (40a) fluidisch verbindet, wobei die zumindest eine zweite schieberkolbenaufnahmeseitige Verbindungsöffnung (40a) in Bewegungsrichtung des Schieberkolbens (20) von der zumindest einen ersten schieberkolbenaufnahmeseitige Verbindungsöffnung (30a) beabstandet ist, und
eine Angleichvolumenaufnahmekammer (Av), die über einen dritten Verbindungsabschnitt (50) mit der Schieberkolbenaufnahme (10) über zumindest eine dritte schieberkolbenaufnahmeseitige Verbindungsöffnung (50a) fluidisch verbunden ist,
wobei der Schieberkolben (20) derart konfiguriert ist, dass in zumindest einer ersten Position des Schieberkolbens (20) in der Bewegungsrichtung die Angleichvolumenaufnahmekammer (Av) über den dritten Verbindungsabschnitt (50) und den zweiten Verbindungsabschnitt (40) fluidisch mit der Steuerkammer (A) verbindbar ist.

2. Angleichventil (1) nach Anspruch 1, wobei das Angleichventil (1) zudem einen vierten Verbindungsabschnitt (60) aufweist, der eine Entlüftungsleitung (O) mit der Schieberkolbenaufnahme (10) über zumindest eine vierte schieberkolbenaufnahmeseitige Verbindungsöffnung (60a) fluidisch verbindet, die in Bewegungsrichtung des Schieberkolbens (20) zwischen der zumindest einen ersten schieberkolbenaufnahmeseitigen Verbindungsöffnung (30a) und der zumindest zweiten schieberkolbenaufnahmeseitigen Verbindungsöffnung (40a) angeordnet ist, und wobei der Schieberkolben (20) derart konfiguriert ist, dass in zumindest einer zweiten Position des Schieberkolbens (20) in der Bewegungsrichtung die Angleichvolumenaufnahmekammer (Av) über den dritten Verbindungsabschnitt (50) und den vierten Verbindungsabschnitt (60) fluidisch mit der Entlüftungsleitung (O) verbindbar ist und die fluidische Verbindung der Angleichvolumenaufnahmekammer (Av) über den dritten Verbindungsabschnitt (50) und den zweiten Verbindungsabschnitt (40) mit der Steuerkammer (A) trennbar ist.

3. Angleichventil (1) nach Anspruch 1 oder 2, wobei die zumindest eine dritte schieberkolbenaufnahmeseitige Verbindungsöffnung (50a) in Bewegungsrichtung des Schieberkolbens (20) zwischen der zumindest einen zweiten schieberkolbenaufnahmeseitigen Verbindungsöffnung (40a) und der zumindest einen ersten schieberkolbenaufnahmeseitigen Verbindungsöffnung (30a), insbesondere zwischen der zumindest einen zweiten schieberkolbenaufnahmeseitigen Verbindungsöffnung (40a) und der zumindest einen vierten schieberkolbenaufnahmeseitigen Verbindungsöffnung (60a), angeordnet ist.

4. Angleichventil (1) nach einem der vorherigen Ansprüche, wobei der Schieberkolben (20) über ein federelastisches Element (70) in Richtung der ersten Position in der Bewegungsrichtung vorgespannt ist.

5. Angleichventil (1) nach einem der vorherigen Ansprüche, wobei der Schieberkolben (20) durch einen mit dem zweiten Verbindungsabschnitt (40) fluidisch verbundenen zweiten Schieberkolbenaufnahmeabschnitt (10b) mit einem zum Druck der Steuerkammer (A) korrespondierenden Druck beaufschlagbar ist.

6. Angleichventil (1) nach Anspruch 4 und Anspruch 5, wobei eine aus einem zu einem vorbestimmten Mindestdruck der Steuerkammer (A) korrespondierenden vorbestimmten Mindestdruck resultierende Gegenkraft der Federkraft des federelastischen Elements (70) entgegenwirkt und die Federkraft des federelastischen Elements (70) kleiner als die Gegenkraft ist.

7. Angleichventil (1) nach Anspruch 5 oder 6, wobei der zweite Verbindungsabschnitt (40) zumindest eine zweite schieberkolbenaufnahmeseitige Sekundärverbindungsöffnung (40c) aufweist, die den zweiten Schieberkolbenaufnahmeabschnitt (10b) fluidisch mit der Steuerkammer (A) verbindet.

8. Angleichventil (1) nach Anspruch 7, wobei der Schieberkolben (20) derart konfiguriert ist, dass in der zumindest einen ersten Position des Schieberkolbens (20) die fluidische Verbindung zwischen dem zweiten Schieberkolbenaufnahmeabschnitt (10b) und der Steuerkammer (A) über die zumindest eine zweite schieberkolbenaufnahmeseitige Sekundärverbindungsöffnung (40c) durch den Schieberkolben (20) von der fluidischen Verbindung über die zumindest eine dritte schieberkolbenaufnahmeseitige Verbindungsöffnung (50a) und die zumindest eine zweite schieberkolbenaufnahmeseitige Verbindungsöffnung (40a) trennbar ist.

9. Angleichventil (1) nach Anspruch 8, wobei die zumindest eine zweite schieberkolbenaufnahmeseitige Verbindungsöffnung (40a) und die zumindest eine zweite schieberkolbenaufnahmeseitige Sekundärverbindungsöffnung (40c) in Bewegungsrichtung des Schieberkolbens (20) voneinander beabstandet sind und insbesondere die schieberkolbenaufnahmeseitige Sekundärverbindungsöffnung (40c) auf einer der zumindest einen ersten schieberkolbenaufnahmeseitigen Verbindungsöffnung (30a) abgewandten Seite der zumindest einen zweiten schieberkolbenaufnahmeseitigen Verbindungsöffnung (40a) angeordnet ist.

10. Angleichventil (1) nach einem der vorherigen Ansprüche, wobei der Schieberkolben (20) durch einen mit dem ersten Verbindungsabschnitt (30) fluidisch verbundenen ersten Schieberkolbenaufnahmeabschnitt (10a) mit einem zum Druck der Hauptdruckmedienleitung (L) korrespondierenden Druck beaufschlagbar ist.

11. Angleichventil (1) nach einem der vorherigen Ansprüche, wobei der Schieberkolben (20) zumindest eine zur Bewegungsrichtung radial außen liegende zumindest abschnittsweise umlaufende Nut (21) aufweist, über die in der zumindest einen ersten Position des Schieberkolbens (20) in der Bewegungsrichtung die Angleichvolumenaufnahmekammer (Av) über den dritten Verbindungsabschnitt (50) und den zweiten Verbindungsabschnitt (40) fluidisch mit der Steuerkammer (A) verbindbar ist und/oder in der zumindest einen zweiten Position die Angleichvolumenaufnahmekammer (Av) über den dritten Verbindungsabschnitt (50) und den vierten Verbindungsabschnitt (60) fluidisch mit der Entlüftungsleitung (O) verbindbar ist.

12. Angleichventil (1) nach einem der vorherigen Ansprüche, wobei der Schieberkolben (20) zumindest einen zumindest abschnittsweise innenliegenden Fluidkanal aufweist, über den in der zumindest einen ersten Position des Schieberkolbens (20) in der Bewegungsrichtung die Angleichvolumenaufnahmekammer (Av) über den dritten Verbindungsabschnitt (50) und den zweiten Verbindungsabschnitt (40) fluidisch mit der Steuerkammer (A) verbindbar ist und/oder in der zumindest einen zweiten Position des Schieberkolbens (20) die Angleichvolumenaufnahmekammer (Av) über den dritten Verbindungsabschnitt (50) und den vierten Verbindungsabschnitt (60) fluidisch mit der Entlüftungsleitung (O) verbindbar ist.

13. Bremssystem für eine Druckmedienbremse für Schienenfahrzeuge aufweisend:
ein Angleichventil (1) nach einem der Ansprüche 1 bis 12,
eine Hauptdruckmedienleitung (L), die über eine hauptdruckmedienleitungsseitige Verbindungsöffnung (30b) mit dem ersten Verbindungsabschnitt (30) des Angleichventils (1) fluidisch verbunden ist, und
eine Steuerkammer (A), die über eine steuerkammerseitige Verbindungsöffnung (40b) mit dem zweiten Verbindungsabschnitt (40) fluidisch verbunden ist,
wobei der Schieberkolben (20) des Angleichventils (1) im gelösten Zustand der Druckmedienbremse sowie bei einer Betriebsbremsung in die zumindest eine erste Position bewegbar und/oder in dieser haltbar ist, in der die Angleichvolumenaufnahmekammer (Av) über den dritten Verbindungsabschnitt (50) und den zweiten Verbindungsabschnitt (40) fluidisch mit der Steuerkammer (A) verbindbar ist.

14. Bremssystem nach Anspruch 13, wobei das Bremssystem zudem eine Entlüftungsleitung (O) aufweist, die über eine entlüftungsleitungsseitige Verbindungsöffnung (60b) mit dem vierten Verbindungsabschnitt (60) des Angleichventils (1) nach Anspruch 2 verbunden ist,
wobei das Bremssystem derart konfiguriert ist, dass bei einer Schnellbremsung der zum Druck der Hauptdruckmedienleitung (L) korrespondierende Druck im ersten Schieberkolbenaufnahmeabschnitt (1 0a) des Angleichventils (1) nach Anspruch 10 aufgehoben wird, so dass der Schieberkolben (20) durch den zum Druck der Steuerkammer (A) korrespondierenden Druck im zweiten Schieberkolbenaufnahmeabschnitt (10b) des Angleichventils (1) nach Anspruch 5 in die zumindest eine zweite Position bewegbar ist, so dass die Angleichvolumenaufnahmekammer (Av) entlüftbar ist.

15. Bremssystem nach Anspruch 14, wobei das Bremssystem derart konfiguriert ist, dass der Schieberkolben (20) über erneute Druckbeaufschlagung des ersten Schieberkolbenaufnahmeabschnitts (10a) mit einem vorbestimmten zum Druck der Hauptdruckmedienleitung (L) korrespondierenden Druck wieder in die zumindest eine erste Position bewegbar ist.

## Claims

1. Adjusting valve (1) for adjusting a control chamber pressure of a pressure medium brake for railway vehicles, having:
a slide piston receptacle (10) with a slide piston guide (11),
a slide piston (20) which is guided in the slide piston guide (11) and
can be moved bidirectionally in a direction of movement predefined by the slide piston guide (11),
a first connecting section (30) which fluidically connects a main pressure medium line (L) to the slide piston receptacle (10) via at least a first connecting opening (30a) on the slide piston receptacle side,
a second connecting section (40) which fluidically connects a control chamber (A) to the slide piston receptacle (10) via at least one second connecting opening (40a) on the slide piston receptacle side, wherein the at least one second connecting opening (40a) on the slide piston receptacle side is spaced apart from the at least one first connecting opening (30a) on the slide piston receptacle side in the direction of movement of the slide piston (20), and
an adjusting volume receiving chamber (Av) which is fluidically connected via a third connecting section (50) to the slide piston receptacle (10) via at least one third connecting opening (50a) on the slide piston receptacle side,
wherein the slide piston (20) is configured such that, in at least a first position of the slide piston (20) in the direction of movement, the adjusting volume receiving chamber (Av) can be fluidically connected to the control chamber (A) via the third connecting section (50) and the second connecting section (40).

2. Adjusting valve (1) according to claim 1, wherein the adjusting valve (1) further has a fourth connecting section (60) which fluidically connects a vent line (O) to the slide piston receptacle (10) via at least one fourth connecting opening (60a) on the slide piston receptacle side, which connecting opening is arranged in the direction of movement of the slide piston (20) between the at least one first connecting opening (30a) on the slide piston receptacle side and the at least second connecting opening (40a) on the slide piston receptacle side, and wherein the slide piston (20) is configured such that, in at least a second position of the slide piston (20) in the direction of movement, the adjusting volume receiving chamber (Av) can be fluidically connected to the vent line (O) via the third connecting section (50) and the fourth connecting section (60) and the fluidic connection of the adjusting volume receiving chamber (Av) to the control chamber (A) can be disconnected via the third connecting section (50) and the second connecting section (40).

3. Adjusting valve (1) according to claim 1 or 2, wherein the at least one third connecting opening (50a) on the slide piston receptacle side is arranged in the direction of movement of the slide piston (20) between the at least one second connecting opening (40a) on the slide piston receptacle side and the at least one first connecting opening (30a) on the slide piston receptacle side, in particular between the at least one second connecting opening (40a) on the slide piston receptacle side and the at least one fourth connecting opening (60a) on the slide piston receptacle side.

4. Adjusting valve (1) according to any one of the preceding claims, wherein the slide piston (20) is biased towards the first position in the direction of movement by means of a resilient element (70).

5. Adjusting valve (1) according to any one of the preceding claims, wherein the slide piston (20) can be subjected to a pressure corresponding to the pressure of the control chamber (A) by a second slide piston receiving section (10b) fluidically connected to the second connecting section (40).

6. Adjusting valve (1) according to claim 4 and claim 5, wherein a counterforce resulting from a predetermined minimum pressure corresponding to a predetermined minimum pressure of the control chamber (A) counteracts the spring force of the resilient element (70) and the spring force of the resilient element (70) is smaller than the counterforce.

7. Adjusting valve (1) according to claim 5 or 6, wherein the second connecting section (40) has at least one second secondary connecting opening (40c) on the slide piston receptacle side, which secondary connecting opening fluidically connects the second slide piston receiving section (10b) to the control chamber (A).

8. Adjusting valve (1) according to claim 7, wherein the slide piston (20) is configured in such a way that in the at least one first position of the slide piston (20), the fluidic connection between the second slide piston receiving section (10b) and the control chamber (A) via the at least one second secondary connection opening (40c) on the slide piston receptacle side can be separated by the slide piston (20) from the fluidic connection via the at least one third connecting opening (50a) on the slide piston receptacle side and the at least one second connecting opening (40a) on the slide piston receptacle side.

9. Adjusting valve (1) according to claim 8, wherein the at least one second connecting opening (40a) on the slide piston receptacle side and the at least one second secondary connecting opening (40c) on the slide piston receptacle side are spaced apart from one another in the direction of movement of the slide piston (20) and, in particular, the secondary connecting opening (40c) on the slide piston receptacle side is arranged on a side of the at least one second connecting opening (40a) on the slide piston receptacle side that faces away from the at least one first connecting opening (30a) on the slide piston receptacle side.

10. Adjusting valve (1) according to any one of the preceding claims, wherein the slide piston (20) can be subjected to a pressure corresponding to the pressure of the main pressure medium line (L) by a first slide piston receiving section (10a) fluidically connected to the first connecting section (30).

11. Adjusting valve (1) according to any one of the preceding claims, wherein the slide piston (20) has at least one circumferential groove (21) which is located radially on the outside at least in sections with respect to the direction of movement, via which groove, in the at least one first position of the slide piston (20) in the direction of movement, the adjusting volume receiving chamber (Av) can be fluidically connected to the control chamber (A) via the third connecting section (50) and the second connecting section (40) and/or, in the at least one second position, the adjusting volume receiving chamber (Av) can be fluidically connected to the vent line (O) via the third connecting section (50) and the fourth connecting section (60).

12. Adjusting valve (1) according to any one of the preceding claims, wherein the slide piston (20) has at least one fluid channel located inside at least in sections, via which, in the at least one first position of the slide piston (20) in the direction of movement, the adjusting volume receiving chamber (Av) can be fluidically connected to the control chamber (A) via the third connecting section (50) and the second connecting section (40) and/or, in the at least one second position of the slide piston (20), the adjusting volume receiving chamber (Av) can be fluidically connected to the vent line (O) via the third connecting section (50) and the fourth connecting section (60).

13. Brake system for a pressurised medium brake for railway vehicles, having:
an adjusting valve (1) according to any one of claims 1 to 12,
a main pressure medium line (L) which is fluidically connected to the first connecting section (30) of the adjusting valve (1) via a connecting opening (30b) on the main pressure medium line side, and
a control chamber (A) which is fluidically connected to the second connecting section (40) via a connecting opening (40b) on the control chamber side,
wherein the slide piston (20) of the adjusting valve (1) can be moved into and/or held in the at least one first position when the pressure medium brake is in the released state and during service braking, in which position the adjusting volume receiving chamber (Av) can be fluidically connected to the control chamber (A) via the third connecting section (50) and the second connecting section (40).

14. Brake system according to claim 13, wherein the brake system further has a vent line (O) which is connected to the fourth connecting section (60) of the adjusting valve (1) according to claim 2 via a connecting opening (60b) on the vent line side,
wherein the brake system is configured in such a way that, during emergency braking, the pressure in the first slide piston receiving section (10a) of the adjusting valve (1) according to claim 10 corresponding to the pressure of the main pressure medium line (L) is cancelled, so that the slide piston (20) can be moved into the at least one second position by the pressure corresponding to the pressure of the control chamber (A) in the second slide piston receiving section (10b) of the adjusting valve (1) according to claim 5, so that the adjusting volume receiving chamber (Av) can be vented.

15. Brake system according to claim 14, wherein the brake system is configured in such a way that the slide piston (20) can be moved back into the at least one first position by renewed pressurisation of the first slide piston receiving section (10a) with a predetermined pressure corresponding to the pressure of the main pressure medium line (L).

## Revendications

1. Soupape d'ajustement (1) destinée à l'ajustement d'une pression de chambre de commande d'un frein à fluide de pression présentant :
un logement de piston tiroir (10) avec un guidage de piston tiroir (11),
un piston tiroir (20) qui est guidé dans le guidage de piston tiroir (11) et
est mobile de manière bidirectionnelle dans un sens de déplacement prédéfini par le guidage de piston tiroir (11),
une première section de liaison (30) qui relie fluidiquement une conduite de fluide de pression principale (L) au logement de piston tiroir (10) via au moins une première ouverture de liaison (30a) côté logement de piston tiroir,
une deuxième section de liaison (40) qui relie fluidiquement une chambre de commande (A) au logement de piston tiroir (10) via au moins une seconde ouverture de liaison (40a) côté logement de piston tiroir, dans laquelle la au moins une seconde ouverture de liaison (40a) côté logement de piston tiroir est espacée dans le sens de déplacement du piston tiroir (20) de la au moins une première ouverture de liaison (30a) côté logement de piston tiroir, et
une chambre de réception de volume d'ajustement (Av) qui est reliée fluidiquement via une troisième section de liaison (50) au logement de piston tiroir (10) via au moins une troisième ouverture de liaison (50a) côté logement de piston tiroir,
dans laquelle le piston tiroir (20) est configuré de telle manière que dans au moins une première position du piston tiroir (20) dans le sens de déplacement, la chambre de réception de volume d'ajustement (Av) peut être reliée fluidiquement à la chambre de commande (A) via la troisième section de liaison (50) et la deuxième section de liaison (40).

2. Soupape d'ajustement (1) selon la revendication 1, dans laquelle la soupape d'ajustement (1) présente en outre une quatrième section de liaison (60) qui relie fluidiquement une conduite de ventilation (C) au logement de piston tiroir (10) via au moins une quatrième ouverture de liaison (60a) côté logement de piston tiroir qui est agencée dans le sens de déplacement du piston tiroir (20) entre la au moins une première ouverture de liaison (30a) côté logement de piston tiroir et la au moins seconde ouverture de liaison (40a) côté logement de piston tiroir, et dans laquelle le piston tiroir (20) est configuré de telle manière que, dans au moins une seconde position du piston tiroir (20) dans le sens de déplacement, la chambre de réception de volume d'ajustement (Av) peut être reliée fluidiquement à la conduite de ventilation (O) via la troisième section de liaison (50) et la quatrième section de liaison (60) et la liaison fluidique de la chambre de réception de volume d'ajustement (Av) avec la chambre de commande (A) peut être séparée via la troisième section de liaison (50) et la deuxième section de liaison (40).

3. Soupape d'ajustement (1) selon la revendication 1 ou 2, dans laquelle la au moins une troisième ouverture de liaison (50a) côté logement de piston tiroir dans le sens de déplacement du piston tiroir (20) est agencée entre la au moins une seconde ouverture de liaison (40a) côté logement de piston tiroir et la au moins une première ouverture de liaison (30a) côté logement de piston tiroir, en particulier entre la au moins une seconde ouverture de liaison (40a) côté logement de piston tiroir et la au moins une quatrième ouverture de liaison (60a) côté logement de piston tiroir.

4. Soupape d'ajustement (1) selon l'une quelconque des revendications précédentes, dans laquelle le piston tiroir (20) est précontraint en direction de la première position dans le sens de déplacement via un élément (70) élastique.

5. Soupape d'ajustement (1) selon l'une quelconque des revendications précédentes, dans laquelle le piston tiroir (20) peut être soumis à une pression correspondant à la pression de la chambre de commande (A) par une seconde section de logement de piston tiroir (10b) reliée fluidiquement à la deuxième section de liaison (40).

6. Soupape d'ajustement (1) selon la revendication 4 et la revendication 5, dans laquelle une force antagoniste résultant d'une pression minimale prédéterminée correspondant à une pression minimale prédéterminée de la chambre de commande (A) agit contre la force de ressort de l'élément (70) élastique et la force de ressort de l'élément (70) élastique est inférieure à la force antagoniste.

7. Soupape d'ajustement (1) selon la revendication 5 ou 6, dans laquelle la deuxième section de liaison (40) présente au moins une seconde ouverture de liaison secondaire (40c) côté logement de piston tiroir qui relie fluidiquement la seconde section de logement de piston tiroir (10b) à la chambre de commande (A).

8. Soupape d'ajustement (1) selon la revendication 7, dans laquelle le piston tiroir (20) est configuré de telle manière que dans la au moins une première position du piston tiroir (20), la liaison fluidique entre la seconde section de logement de piston tiroir (10b) et la chambre de commande (A) via la au moins une seconde ouverture de liaison secondaire (40c) côté logement de piston tiroir peut être séparée par le piston tiroir (20) de la liaison fluidique via la au moins une troisième ouverture de liaison (50a) côté logement de piston tiroir et la au moins une seconde ouverture de liaison (40a) côté logement de piston tiroir.

9. Soupape d'ajustement (1) selon la revendication 8, dans laquelle la au moins une seconde ouverture de liaison (40a) côté logement de piston tiroir et la au moins un seconde ouverture de liaison secondaire (40c) côté logement de piston tiroir sont espacées l'une de l'autre dans le sens de déplacement du piston tiroir (20) et en particulier l'ouverture de liaison secondaire (40c) côté logement de piston tiroir est agencée sur un côté éloigné de la au moins une première ouverture de liaison (30a) côté logement de piston tiroir de la au moins une seconde ouverture de liaison (40a) côté logement de piston tiroir.

10. Soupape d'ajustement (1) selon l'une quelconque des revendications précédentes, dans laquelle le piston tiroir (20) peut subir une pression correspondant à la pression de la conduite de fluide de pression principale (L) par une première section de logement de piston tiroir (10a) reliée fluidiquement à la première section de liaison (30).

11. Soupape d'ajustement (1) selon l'une quelconque des revendications précédentes, dans laquelle le piston tiroir (20) présente au moins une rainure (21) périphérique se trouvant radialement à l'extérieur au moins par sections par rapport au sens de déplacement, via laquelle, dans la au moins une première position du piston tiroir (20) dans le sens de déplacement, la chambre de réception de volume d'ajustement (Av) peut être reliée fluidiquement à la chambre de commande (A) via la troisième section de liaison (50) et la deuxième section de liaison (40) et/ou, dans la au moins une seconde position, la chambre de réception de volume d'ajustement (Av) peut être reliée fluidiquement à la conduite de ventilation (O) via la troisième section de liaison (50) et la quatrième section de liaison (60).

12. Soupape d'ajustement (1) selon l'une quelconque des revendications précédentes, dans laquelle le piston tiroir (20) présente au moins un canal de fluide situé à l'intérieur au moins par sections, via lequel, dans la au moins une première position du piston tiroir (20) dans le sens de déplacement, la chambre de réception de volume d'ajustement (Av) peut être reliée fluidiquement à la chambre de commande (A) via la troisième section de liaison (50) et la deuxième section de liaison (40) et/ou, dans la au moins une seconde position du piston tiroir (20), la chambre de réception de volume d'ajustement (Av) peut être reliée fluidiquement à la conduite de ventilation (O) via la troisième section de liaison (50) et la quatrième section de liaison (60).

13. Système de freinage pour un frein à fluide de pression pour véhicules ferroviaires présentant :
une soupape d'ajustement (1) selon l'une quelconque des revendications 1 à 12,
une conduite de fluide de pression principale (L) qui est reliée fluidiquement à la première section de liaison (30) de la soupape d'ajustement (1) via une ouverture de liaison (30b) côté conduite de fluide de pression principale, et
une chambre de commande (A) qui est reliée fluidiquement à la deuxième section de liaison (40) via une ouverture de liaison (40b) côté chambre de commande ,
dans lequel le piston tiroir (20) de la soupape d'ajustement (1) peut être déplacée et/ou maintenue dans la au moins première position lorsque le frein à fluide de pression se trouve à l'état dissous ainsi que lors d'un freinage de service, dans lequel la chambre de réception de volume d'ajustement (Av) peut être reliée fluidiquement à la chambre de commande (A) via la troisième section de liaison (50) et la deuxième section de liaison (40).

14. Système de freinage selon la revendication 13, dans lequel le système de freinage présente en outre une conduite de ventilation (O) qui est reliée à la quatrième section de liaison (60) de la soupape d'ajustement (1) selon la revendication 2 via une ouverture de liaison (60b) côté conduite de ventilation,
dans lequel le système de freinage est configuré de telle manière que, lors d'un freinage rapide, la pression correspondant à la pression de la conduite de fluide de pression principale (L) dans la première section de logement de piston tiroir (10a) de la soupape d'ajustement (1) selon la revendication 10 soit annulée de sorte que le piston tiroir (20) puisse être déplacé dans la au moins une seconde position par la pression correspondant à la pression de la chambre de commande (A) dans la seconde section de logement de piston tiroir (10b) de la soupape d'ajustement (1) selon la revendication 5, de sorte que la chambre de réception de volume d'ajustement (Av) puisse être ventilée.

15. Système de freinage selon la revendication 14, dans lequel le système de freinage est configuré de telle manière que le piston tiroir (20) puisse être de nouveau déplacé dans la au moins une première position via une nouvelle pressurisation de la première section de logement de piston tiroir (10a) avec une pression prédéterminée correspondant à la pression de la conduite de fluide de pression principale (L).
